# EUROPEAN PATENT SPECIFICATION

(11) **EP 3 077 177 B1**
(45) Date of publication and mention of the grant of the patent: **24.10.2018**
(21) Application number: 14828531.5
(22) Date of filing: 03.12.2014
(51) Int. Cl.: B29C 57/04

(54) **APPARATUS AND METHOD FOR MAKING A BELL JOINT**
VORRICHTUNG UND VERFAHREN ZUR HERSTELLUNG EINER AUFGEWEITETEN VERBINDUNG
APPAREIL ET PROCÉDÉ POUR LA FABRICATION DE RACCORD TULIPE

(30) Priority: 04.12.2013 IT RA20130026
(43) Date of publication of application: 12.10.2016
(73) Proprietor: IPM S.R.L., 48022 Lugo (Ravenna) (IT)
(72) Inventor: ARGNANI, Claudio, I-48010 Fusignano (RA) (IT)
(74) Representative: Cicconetti, Andrea
(86) International application number: PCT/IB2014/066559
(87) International publication number: WO 2015/083102

(56) References cited:
- JP-A- S 555 823
- JP-A- S58 220 704
- US-A- 4 395 379

## Description

This invention relates to apparatus and methods for making bell joints on ends of plastic material pipes. In particular, the invention relates to a forming apparatus and a forming method for making bell joints on plastic pipe ends by hot plastic deformation.

In the field of plastic material piping, it is widely used the connection type that provides to join two consecutive pipes by means of sleeves or joints so-called bell joint. By bell joint is meant the so-called "female" end portion of a pipe, which has a widened cross-section (outer and inner diameters) such as to form a widened tubular sleeve which is capable to receive and be coupled with the so-called "male" end, normal and not widened, of the following pipe. Within the joint, an annular groove is generally provided, which is intended to form a seat capable of housing a sealing gasket ensuring liquid seal after the connection between the two pipes in the piping has been carried out. The gasket can either be a shaped gasket provided with a lip or a circular-section annular gasket of the so-called "O-ring" type.

The bell joints are typically carried out directly on the pipe end by means of hot plastic deformation of said end (socketing process) by means of suitable forming systems.

There are forming systems using a metal mandrel or expander forcibly inserted within the pipe such as to make the bell joint by plastic deformation. The mandrel is provided with a plurality of inserts or sectors which can be radially expanded outwardly in order to form the annular groove, which acts as a seat for a sealing gasket. After the groove has been formed, the sectors are radially moved inwardly such as to allow the mandrel to be freely disengaged from the joint in the axial direction. Outer moulds are provided to close the pipe end and apply a suitable external pressure on the bell joint so as to form an outer surface thereof in cooperation with the inner mandrel.

Other known forming systems comprise, in addition to the outer moulds, a blowing system capable of blowing air into the pipe at such a pressure as to deform the plastic material and push the pipe side wall against the outer moulds such as to form the bell joint.

A drawback of these known forming systems is that they cause a reduction in the thickness of the pipe wall, in particular at the gasket annular seat, because the material stretching during the forming operation is greater in this area having a larger diameter. It is thus required to provide a pre-thickening of the pipe in said area, which results in a higher cost of the pipes.

Another drawback of these forming systems, in particular of the air-blowing ones, is that they do not allow to obtain a precise and accurate configuration or geometry of the bell joint inner walls, particularly of the gasket seat. More precisely, these systems do not allow forming in a precise and calibrated manner the gasket seat, which is generally characterized by small dimensions and fillets (bend radiuses).

During the joint forming, the plastic material of the pipe wall, due to the thinning and elongation or stretching thereof in the axial (longitudinal) direction, cannot adhere to the forming surfaces of the outer moulds and/or mandrel sectors in a complete and optimal manner. In case of annular seats having a substantially rectangular or trapezoidal section, the hot forming with the known systems does not allow obtaining sharp edges, i.e. edges having small bend radiuses. On the contrary, annular grooves are obtained having big fillets or bend radiuses of the edges which facilitate the annular gasket (O-ring) coming off the seat or being displaced at various extents when the pipe is used, typically with pressurized fluid flowing therethrough. The coming off or displacement of the gasket causes a sealing loss in the piping resulting in the fluid being conveyed therein to leak outside.

US4395379 discloses a method and a device for forming in a plastic tube part a socket provided with an internal annular groove by pushing the plastic tube onto a mandrel, surrounding the tube part with a mould having an annular recess and forming the groove by radially moving deformation segments of the mandrel. The device further comprises a first sleeve that comprises a shoulder part and surrounds a ring provided with a second sleeve, which can slide over the mandrel. The shoulder part and the second sleeve form a recess for receiving an end part of the socket. The sleeves are rigidly connected and moves together during the operation for compressing and upsetting the plastic tube part at the location of the groove.

JP S555823 discloses a method and an apparatus for molding an enlarged socket in a resin pipe. The apparatus comprises a mandrel, a mobile guide sleeve, a fixed cylinder, a diameter-enlarging drum provided with a divided core mold, an external mold and a thickness-increasing sleeve. In the operation, the resin pipe, which is softened by heating, is inserted in the mandrel so as to slide over the guide sleeve up to stop at the end of the fixed cylinder. Then, the guide sleeve is moved backward, sliding inside the fixed cylinder so that the divided core mold can expand radially, pushed by the diameter-enlarging drum that is moved forward. The divided core mold expand the diameter of the resin pipe against the external mold to form the socket. Then the thickness-increasing sleeve is moved over the fixed cylinder in order to compress and upset the end front portion of the pipe during the socket forming so as to avoid a reduction in thickness of the socket.

JP S58220704 discloses a method and an apparatus for forming a socket on a plastic tube having through longitudinal holes in the tube wall. The apparatus comprises an inner mold, an outer mold, a first flange and a second flange. In the operation, the receptacle part of the tube is heat softened, inserted in the inner mold and expanded by the tapered end thereof. Afterwards, the outer mold is closed and the first flange is attached to a joint end of the tube. The expanding part of the receptacle part is molded by expanding the segments of the inner mold and the end parts of the longitudinal holes of the tube wall are closed by pushing and squeezing the end front portion of the receptacle part with the second flange.

An object of the present invention is to improve known forming apparatuses and methods suitable to make bell joints on plastic material pipes.

Another object is to provide a forming apparatus and method allowing bell joints to be made on plastic material pipes having side walls with substantially constant and even thickness.

A further object is to provide a forming apparatus and method allowing bell joints to be made on plastic pipes with inner surfaces having a precise and accurate configuration or geometry, particularly at annular seats for sealing gaskets.

Another further object is to provide a forming apparatus and method allowing to make bell joints provided with annular seats, in particular having a trapezoidal or rectangular section, for sealing gaskets, in particular of the circular section ring type, having small fillets and/or bend radiuses.

Another further object is to provide a forming apparatus having a simple, reliable and cost-effective structure.

In a first aspect of the invention, a forming apparatus according to claim 1 is provided.

In a second aspect of the invention, a forming method according to claim **13** is provided. The forming apparatus of the invention for making a bell joint on an end of a plastic material pipe by hot plastic deformation comprises moulding means for externally enclosing the pipe end and a mandrel movable along a longitudinal direction and insertable within the end in order to form the bell joint in cooperation with the moulding means.

The mandrel is provided with a plurality of sectors that can be expanded transversally and externally towards the moulding means in order to form an annular seat for a sealing gasket on a side wall of the bell joint.

The apparatus further includes a first compressing flange movable along the longitudinal direction and cooperating with the moulding means to abut against and form the side wall of the bell joint at the annular seat, and a second compressing flange, movable along the longitudinal direction, interposed between the first compressing flange and the mandrel and arranged to abut against and compress an end front portion of the bell joint such as to upset the plastic material against the moulding means, the first compressing flange and the sectors in order to precisely form the seat and the end front portion of the bell joint.

The forming method of the invention for making a bell joint on an end of a plastic material pipe by hot plastic deformation by means of the forming apparatus of the first aspect comprises the steps of:
- positioning an end of the pipe in moulding means of the apparatus arranged in an open configuration (step 1);
- closing the moulding means so as to enclose and lock the pipe end (step 2);
- moving a mandrel and a first compressing flange of the apparatus along a longitudinal direction up to a first inner position so as to insert the mandrel into the end for enlarging the latter and partially form a side wall of the bell joint (step 3);
- expanding sectors of the mandrel externally towards the moulding means in an extended position in order to form on the side wall of the bell joint an annular seat for a sealing gasket (step 4);
- moving a second compressing flange of the apparatus along the longitudinal direction till an end front portion of the bell joint is abutted (step 5);
- moving the mandrel and first compressing flange along the longitudinal direction up to a second inner position and at the same time moving the second compressing flange along the longitudinal direction so as to compress and upset the plastic material against the moulding means, the first compressing flange and the sectors in order to precisely form the annular seat and the end front portion of the bell joint (step 6);
- retracting the sectors within the mandrel and moving along the longitudinal direction the mandrel and the compressing flanges away and disengaging from said pipe;
- opening the moulding means to disengage the pipe.

Owing to these aspects of the invention a forming apparatus and method can be obtained, which allow making bell joints having side walls with a substantially constant and even thickness on plastic material pipes. Furthermore, bell joints are obtained which are provided with inner surfaces having a precise and accurate configuration or geometry, in particular at an annular seat for sealing gaskets. More precisely, the forming apparatus and method of the invention allow making annular seats for sealing gaskets on the bell joints, for example gaskets of the circular section ring type, having very small and precise fillets and/or bend radiuses.

The compression exerted on the end front portion of the pipe by the second compressing flange during the hot forming process is particularly effective, because the plastic material compressed and squeezed between the mandrel sectors, the moulding means and the compressing flanges adheres to an outer surface of the mandrel and to the forming surfaces of the moulding means and the compressing flanges in an optimal manner, substantially by filling any inner space between the side wall of the bell joint and the sectors and/or moulding means.

In addition to this, the upset of the plastic material prevents the thickness of the side wall to be reduced, due to the diametral widening, or can produce, if desired, this thickness to be increased in order to improve the structural resistance of the bell joint.

The second compressing flange includes a shaped end which forms, in cooperation with an inner wall of the first compressing flange and with mandrel sectors, an outer or front portion of the annular seat, which is closer and adjacent to an end front portion of the bell j oint.

The first compressing flange also exerts a merely radial compression action on the side wall of the bell joint, particularly to form and maintain constant the thickness of said side wall at the gasket seat and to form, in cooperation with a second front annular wall of the moulding means and with the mandrel sectors, an inner or rear portion of the annular seat, which is opposite to the outer portion and farther from the end front portion of the bell joint. Furthermore, the first compressing flange, which moves together with the mandrel along the longitudinal direction, prevents the plastic material during the compression and upset from frictionally sliding on the moulding means walls and thus prevents the plastic material from being subjected to axial stretching and/or thickness contraction. The lack of friction also allows reducing the amount of the forces required to push the mandrel and compressing flanges in the longitudinal direction to form the bell joint.

This invention can be better understood and carried out with reference to the attached drawings which illustrate an exemplary and non-limiting embodiment thereof, in which:
- Figure 1 is a cross-section of the forming apparatus of the invention associated with a pipe to be formed;
- Figures 2 to 6 are partially enlarged cross-sections of the apparatus in Figure 1 and the pipe, which illustrate respective sequential operating steps of the forming process of a bell joint on a pipe end;
- Fig. 7 is a cross-section of the apparatus in Figure 1 and the pipe formed with the bell joint;
- Fig. 8 is a partial enlarged view of a detail of the apparatus and pipe in Figure 5.

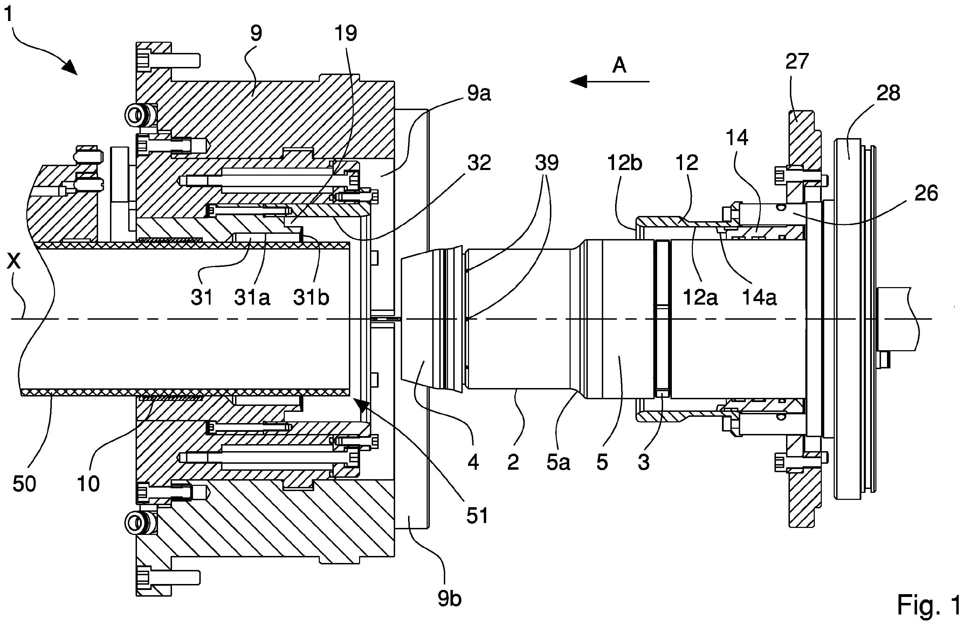

With reference to Figure 1 to 8, the forming apparatus 1 is shown according to the invention for making a bell joint 60 by means of hot plastic deformation on an end 51 of a pipe 50 of plastic material, such as polyolefines or PVC.

The apparatus 1 includes moulding means 9 for externally enclosing the end 51 of the pipe 50 and a mandrel 2 moving in a longitudinal direction A and insertable into the end 51 so as to form, in cooperation with the moulding means 9, the bell joint 60. The longitudinal direction A is parallel to a longitudinal axis X of the pipe 50.

The mandrel 2 comprises, for example, a metal expander having the shape of an inner surface of the bell joint 60 and is provided with a plurality of forming sectors or inserts 3, which are also made of metal and can be transversally expanded, in particular radially with respect to the longitudinal axis X, externally towards the moulding means 9, in particular in an extended position E, in order to form an annular seat 62 for a sealing gasket on a side wall 61 of the bell joint 60. The sectors 3 can be retracted within the mandrel 2 in order to allow inserting or removing the latter into/from the pipe 50.

The mandrel 2 is provided with a head portion 4, which is suitable to be inserted within the end 51 of the pipe 50, and a central portion 5 arranged for transversally enlarge the end 51 and form the bell joint 60 and accordingly provided with a conical section 5a having an increasing diameter.

In the embodiment illustrated herein, the annular seat 62 has a section in the form of an isosceles trapezium with the equal opposite sides arranged on the sides of the seat 62. The annular seat can however have a section with a different shape, such as rectangular or square.

The seat 62 substantially consists of an inner anular groove made by an annular corrugation carried out by the sectors 3 on the side wall 61 of the bell joint, said annular corrugation also comprising an outer annular protrusion 62a matching the inner anular groove.

The apparatus further comprises a first compressing flange 12 and a second compressing flange 14 which are both movable along the longitudinal direction A.

The first compressing flange 12 cooperates with the moulding means 9 to abut against and form an outer surface of the bell joint 61 at the annular seat 62.

The second compressing flange 14 is interposed between the first compressing flange 12 and the mandrel 2 and is arranged to abut against and compress an end front portion 63 of the bell joint 60 in an end step of the forming process so as to compress and upset the plastic material against the moulding means 9, the first compressing flange 12 and the sectors 3 arranged in the extended position E.

The first compressing flange 12 is coaxial with the mandrel 2 and slides within the moulding means 9 and is provided with a respective inner wall 12a, which forms a respective forming surface arranged to abut against and form the side wall 61 of the bell joint 60 at the annular seat 62. More precisely, the inner wall 12a of the first compressing flange 12 forms, in cooperation with the moulding means 9 and the sectors 3 of the mandrel 2, an inner or rear portion 62c of the seat 62 which is farther from the end front portion 63.

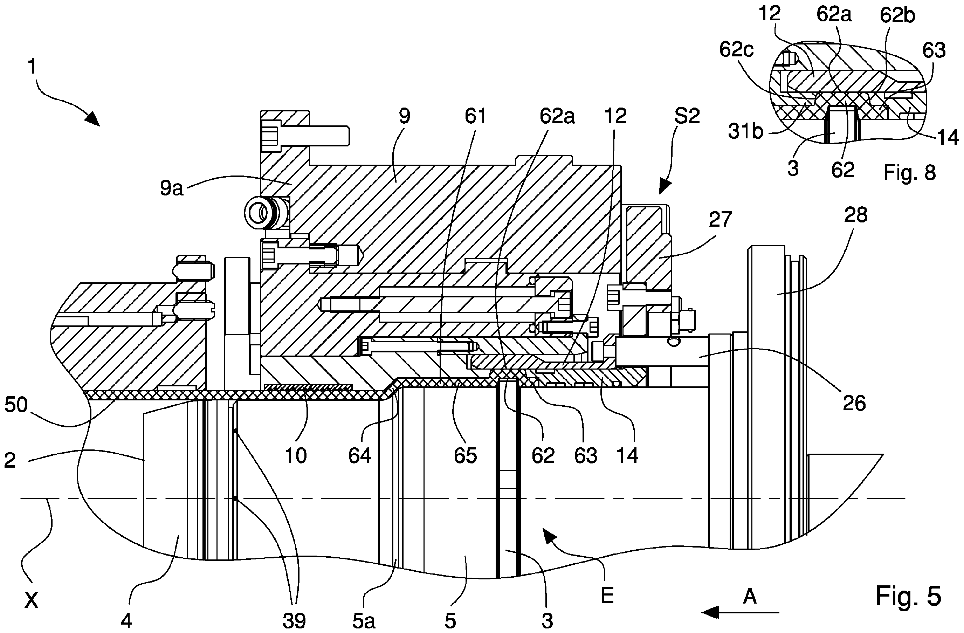

The first compressing flange 12 comprises a respective cylindrical body, which is arranged around and connected to the mandrel 2 and provided with a peripheral edge 12b suitable to be engaged into an annular groove 19 of the moulding means 9, in a final forming position. The second compressing flange 14 slides, coaxial with and interposed between the first compressing flange 12 and the mandrel 2 and is provided with a shaped end 14a, which is a respective forming surface suitable to form, in cooperation with the sectors 3 of the mandrel 2 and the first compressing flange 12, the annular seat 62 and the end front portion 63 of the bell joint 60. More precisely, the shaped end 14a of the second compressing flange 14 forms, in cooperation with the inner wall 12a of the first flange 12 and the sectors 3, an outer or front portion 62b of the seat 62, which is opposite to the inner portion 62c and is closer and adjacent to the end front portion 63 (Figure 8).

The second compressing flange 14 comprises a respective cylindrical body which slides on the mandrel 2 within the first compressing flange 12.

The second compressing flange 14 is separately and independently moved along the longitudinal direction A by first actuating means 27 of a known type and not illustrated in detail in the figures.

In the embodiment illustrated in the figures, the first compressing flange 12 is rigidly connected to the mandrel 2 by means of connections 26 and is moved integrally with the mandrel 2 along the longitudinal direction A.

Second actuating means 28, of a known type and not illustrated in detail in the figures, is provided for moving the mandrel 2 in the longitudinal direction A.

In a variant of the apparatus 1 of the invention, which is not illustrated, the first compressing flange 12 is separately and independently moved along the longitudinal direction A by third actuating means.

The moulding means 9 comprises two half-moulds 9a, 9b which are movable relative to one another in opened and closed positions along a direction that is transversal, in particular orthogonal, to the longitudinal axis X of the pipe 50. In an opening position, the half-moulds 9a, 9b enable introducing and positioning in the apparatus 1 the end 51 of the pipe 50 to be formed; in the closed position (illustrated in the figures) the half-moulds 9a, 9b enclose the end 51.

The half-moulds 9a, 9b comprise a first forming cavity 31 for forming with the mandrel 2 a conical portion 64 and a cylindrical portion 65 of the side wall 61 of the bell joint 60 and a second forming cavity 32 for receiving the first compressing flange 12 and second compressing flange 14, which form, in cooperation with the mandrel 2 and the sectors 3, the annular seat 62 for the sealing gasket and the end front portion 63 of the bell joint 60. The first forming cavity 31 comprises a respective first cylindrical wall 31a intended to form the conical portion 64 and a cylindrical portion 65 of the side wall 61 and a second front annular wall 31b intended to form the seat 62 for the gasket in cooperation with the sectors 3 and the compressing flanges 12, 14. In particular, the second front annular wall 31b of the moulding means 9 forms the inner portion 62c of the seat 62, in cooperation with the inner wall 12a of the first compressing flange 12 and the sectors 3.

The first cylindrical wall 31a and the second front annular wall 31b constitute the forming surfaces of the moulding means 9.

Stop means 10 is fastened to the moulding means 9 in order to abut, in the closed position of said moulding means 9, against an outer surface of the end 51 so as to lock the pipe 50, in particular along the longitudinal direction A. The stop means 10, which comprises a cylindrical portion made of rubber or similar material, ensure that the pipe 50 is stopped and locked while the mandrel 2 is inserted and during the compression and upset of the plastic material carried out by the compressing flanges 12, 14.

The forming apparatus 1 of the invention further comprises cooling means of a known type and not illustrated in the figures, which are arranged to cool the moulding means 9 in a controlled manner, particularly the outer surfaces thereof abutting against the side wall 61 of the bell joint 60.

The apparatus 1 also comprises blowing means capable of introducing pressurized air into the pipe 50 thereby providing an airflow interposed between an inner surface of the pipe 50 and the mandrel 2, such as to facilitate the insertion of the latter into said pipe 50 along the longitudinal direction A.

The introduction of high pressurized air is also used during the forming step in order to exert radial forces capable of pushing the side wall 61 of the bell joint 60 against the outer surfaces of the moulding means 9 and compressing flanges 12, 14 and to cool the thus-obtained bell joint, as better explained in the description below.

The blowing means comprises a plurality of openings 39 provided on the mandrel 2, in particular at the head portion 4 thereof, and through which the pressurized air comes out. A plurality of sealing gaskets, of a known type, are provided on the mandrel 2 and second compressing flange 14 to prevent undesired air leaks.

The operation of the apparatus 1 and relevant forming method for making a bell joint 60 on the end 51 of a plastic material pipe 50 provides the steps described below.

In a first operating step (step 1), the previously heated end 51 of the pipe 50 is inserted into the moulding means 9 which is arranged in an open configuration.

In a second operating step (step 2) the moulding means 9 is closed so as to enclose and lock the end 51, in particular by means of the stop means 10 (Figure 1).

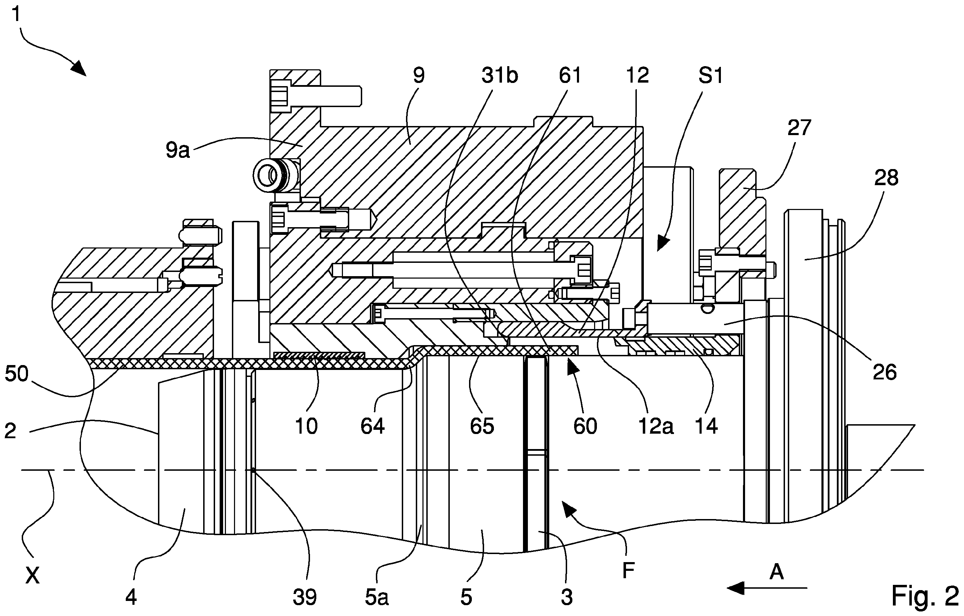

In a third operating step (step 3) the mandrel 2 and the first compressing flange 12 are moved along the longitudinal direction A up to a first inner position S1 such that the mandrel 2 is inserted into the end 51 in order to enlarge the latter and partially form the bell joint 60 (Figure 2).

More precisely, the head portion 4 of the mandrel 2 is inserted into the pipe 50 and the central portion 5, provided with the conical section 5a of increasing diameter, radially enlarge the end 51 and forms the side wall 61 of the bell joint 60 in cooperation with the first cavity 31 of the moulding means 9.

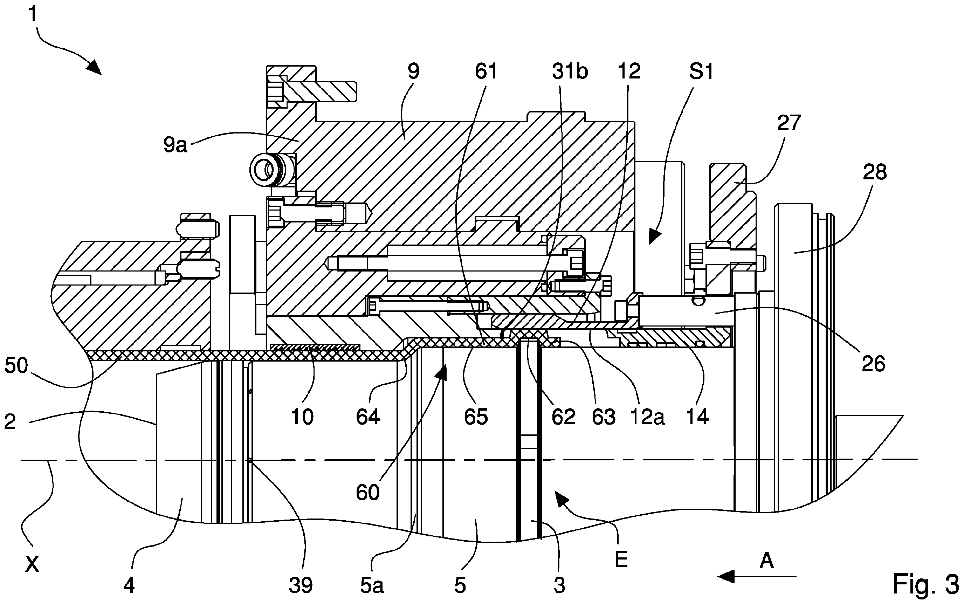

In a fourth step (step 4) there is provided to externally expand the sectors 3 of the mandrel 2, radially in the direction of the moulding means 9 and up to an extended position E so as to form the annular seat 62, at least partially, on the side wall 61 of the bell joint 60. More precisely, the sectors 3 by expanding push the relevant portion of side wall 61 against the inner wall 12a of the first compressing flange 12 (Figure 3).

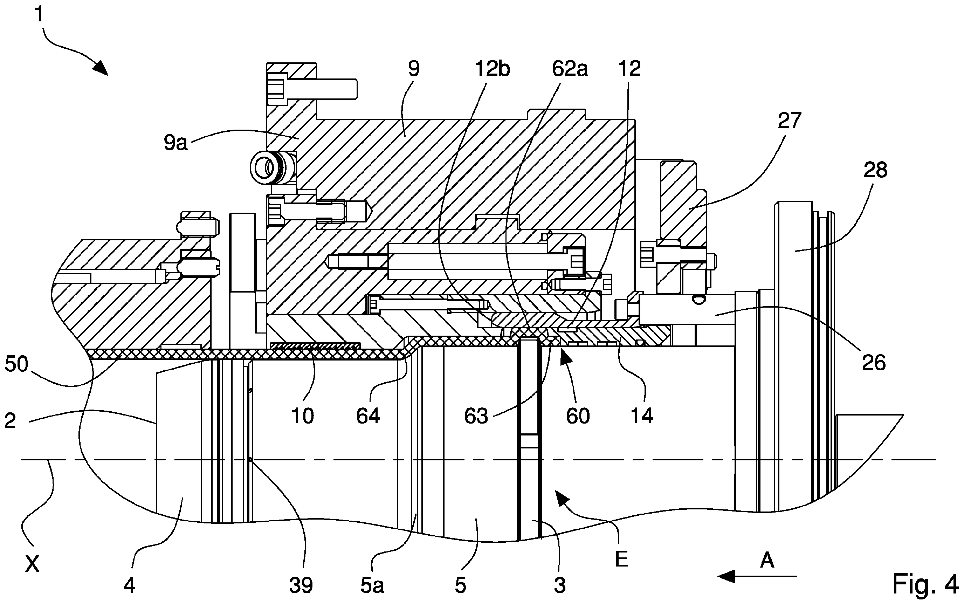

In a fifth operating step (step 5) the second compressing flange 14 is moved independently of the mandrel 2 along the longitudinal direction A until it abuts against an end front portion 63 of the bell joint 60 (Figure 4). The second compression means 14 longitudinally slides interposed between the mandrel 2 and the first compression means 12.

In a sixth operating step (step 6) the mandrel 2 and the first compressing flange 12 are moved in the longitudinal direction A up to a second inner position S2 and at the same time the second compressing flange 14 is moved along the longitudinal direction A such as to compress and upset the plastic material against the moulding means 9, the first compressing flange 12 and the sectors 3 in order to completely form the annular seat 62 and the end front portion 63 of the bell joint 60 (Figure 5). The displacement of the second compressing flange 14 along the longitudinal direction A towards the sectors 3 of mandrel 2, i.e. the corresponding final position taken by the second compressing flange 14 within the moulding means 9, depends on the extent of upset desired to be imparted to the plastic material.

It should be noted that while the second compressing flange 14 exerts a substantially longitudinal or axial compression on the end front portion 63 such as to press the plastic material against the sectors 3 and thus forming the outer portion 62b of the seat 62, the first compressing flange 12 exerts a substantially radial compression which presses the plastic material against the inner portion 62c of the seat 62. Thereby, all the plastic material of the side wall 61 is pressed against the sectors 3 and the forming surfaces of the moulding means 3 and the compressing flanges 12, 14.

In addition, the first compressing flange 12, by moving integrally with the mandrel 2 along the longitudinal direction A, prevents the plastic material from frictionally sliding on the walls of the moulding means 9 during the compression and upset. In fact, the inner wall 12a of the first compressing flange 12, which abuts against and externally forms the seat 62, moves along with the plastic material in the longitudinal direction A.

The forming surface of the moulding means 9 comprises the second front annular wall 31b against which the plastic material is pressed and compressed, substantially in the axial direction. Since the plastic material during the forming operation of the seat 62 and of the end front portion 63 of the bell joint 60 does not frictionally slide on fixed walls of the moulding means, it is not subjected to axial stretching and/or thickness contraction.

The lack of friction also allows reducing the amount of the forces required to push the mandrel 2 and compressing flanges 12, 14 along the longitudinal direction A in order to form the bell joint 60.

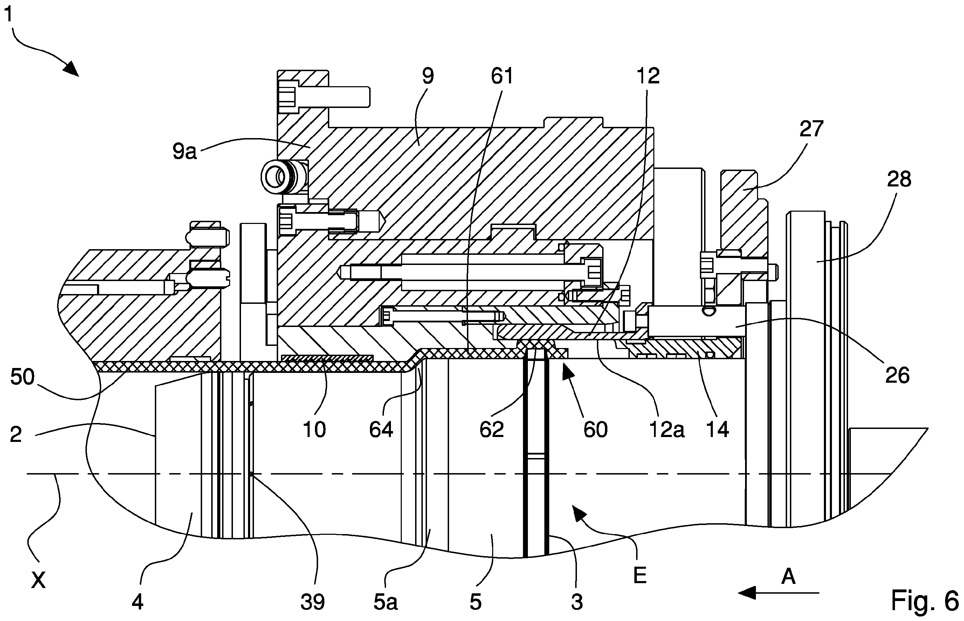

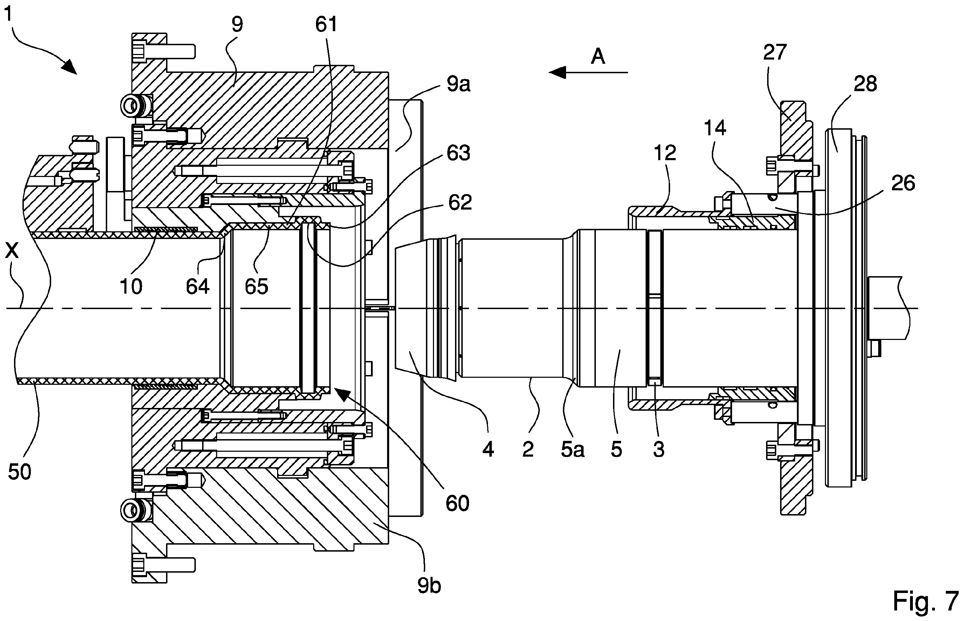

After a preset time interval, the sectors 3 are retracted within the mandrel 2, in a disengagement position F, then the second compressing flange 14, th mandrel 2 and the first compressing flange 12 are moved backwards in the longitudinal direction A away and disengaging from said pipe 50, which is now provided with the bell joint 60. More precisely and preferably, the second compressing flange 14 is moved and disengaged from the pipe 50 whereas the sectors 3 are retracted (Figure 6); the mandrel 2 and the first compressing flange 12 are afterward moved and disengaged from the pipe 50, when the sectors 3 have been completely retracted in the disengagement position F (Figure 7).

After the mandrel 2 and the compressing flanges 12, 14 have been disengaged and spaced apart in the longitudinal direction A, the moulding means 9 are opened to release the pipe 50 and allow extracting the latter from the forming apparatus 1.

During the preset time interval, after the compression and upset of the plastic material by means of the compressing flanges 12, 14 and before retracting the sectors 3 of the mandrel 2 and disengaging the mandrel 2 and the compressing flanges 12, 14, there is provided to cool the bell joint 60, for example by cooling the moulding means 9 and/or by blowing cooled pressurized air through the opening 39 of the mandrel 2.

In the third operating step, while the mandrel 2 is being moved, there is further provided to introduce pressurized air within the pipe 50 through the openings 39 in order to produce an airflow interposed between an inner surface of the pipe 50 and an outer surface of the mandrel 2. This airflow creates a sort of air cushion capable of reducing the friction and thus facilitating the sliding of the hot plastic material on the outer surface of the mandrel 2, i.e. facilitating the insertion of the mandrel 2 into the pipe 50.

It is also provided, particularly during the sixth operating step, to introduce pressurized air within the pipe 50 during the compression and upset exerted by the compressing flanges 12, 14 in order to exert forces, particularly radial, which are suitable to push the side wall 61 of the bell joint 60 against the forming surfaces 31a, 31b, 14a, 15a of the moulding means 9 and compressing flanges 12, 14.

The pressurized air also contributes to cool and solidify the hot plastic material of the thus-formed bell joint 60.

Before the positioning within the apparatus 1, the end 51 of the pipe 50 is heated in advance, in particular at a temperature close to the softening temperature of the plastic material.

Owing to the apparatus and method of the invention, it is possible to make on plastic material pipes bell joints having side walls with a substantially constant and even thickness. In addition, bell joints are obtained, which are provided with inner walls or surfaces having a precise and accurate configuration or geometry, in particular at an annular seat for sealing gaskets. More precisely, the forming apparatus and method of the invention allow making annular seats for sealing gaskets on the bell joints, for example gaskets of the circular section ring type (O-ring), having very small and precise fillests and/or bend radiuses.

The compression exerted on the end front portion 63 of the pipe by the second compressing flange 14 during the hot forming process is particularly effective, because the plastic material compressed and squeezed between the sectors 3 of the mandrel 2, the moulding means 9 and the compressing flanges 12, 14 adheres to an outer surface of the mandrel 2 and to the forming surfaces of the moulding means 9 and compressing flanges 12, 14 in an optimal manner, substantially by filling any inner spaces between the side wall 61 and sectors 3 and/or moulding means 9. Furthermore, such upset prevents a reduction in the thickness of the side wall 61 resulting from the diameter widening or can produce, when desired, an increase in this thickness in order to improve the structural resistance of the bell joint 60.

The shaped end 14a of the second compressing flange 14 forms, in cooperation with the inner wall 12a of the first compressing flange 12 and the sectors 3, an outer or front portion 62b of the seat 62, which is closer and adjacent to the end front portion 63.

The first compressing flange 12 further exerts a compression action, mainly radial, on the side wall 61 of the bell joint 60, in particular to form and keep constant the thickness of said side wall 61 at the seat 62 and to form, in cooperation with the second front annular wall 31b of the moulding means 9 and sectors 3, an inner or rear portion 62c of the seat 62, which is opposite to the outer portion 62b and farther from the end front portion 63. Moreover, the first compressing flange 12, which moves integrally with the mandrel 2 along the longitudinal direction A, prevents the plastic material from frictionally sliding on the walls of the moulding means during compression and consequently from being subjected to axial stretching and/or thickness contraction.

The lack of friction also allows reducing the amount of the forces required to push the mandrel 2 and the compressing flanges 12, 14 along the longitudinal direction A to form the bell joint 60.

Tests carried out by the applicant on plastic material pipes having different diameters and thicknesses have shown that bell joints can be made having a substantially constant wall thickness, which is equal to or even greater than the wall thickness of the pipe 50. In addition, gasket seats are obtained having particularly small and precise fillests and bend radiuses, thereby improving the sealing and functionality of the gaskets. The seats thus made allow the gasket to be properly positioned and housed within the seat 62, while the pipe is used, even when the fluid conveyed by the pipe is subjected to high operating pressures.

## Claims

1. Forming apparatus (1) for making a bell joint (60) on an end (51) of a plastic material pipe (50) by means of hot plastic deformation, comprising moulding means (9) for externally enclosing said end (51) and a mandrel (2) movable along a longitudinal direction (A) and insertable into said end (51) in order to form said bell joint (60) in cooperation with said moulding means (9), said mandrel (2) being provided with a plurality of sectors (3) which can be transversally and externally expanded towards said moulding means (9) in an extended position (E) to form on a side wall (61) of said bell joint (60) an annular seat (62) for a sealing gasket, said apparatus (1) comprising:
- a first compressing flange (12) movable along said longitudinal direction (A) and cooperating with said moulding means (9) to abut against and form said side wall (61) at said annular seat (62);
- a second compressing flange (14) movable along said longitudinal direction (A), interposed between said first compressing flange (12) and said mandrel (2) and arranged to abut against and compress an end front portion (63) of said bell joint (60) so as to upset the plastic material against said moulding means (9), said first compressing flange (12) and said sectors (3), arranged in said extended position (E), in order to precisely form said seat (62) and said end front portion (63) of said bell joint (60);
said apparatus (1) being **characterized in that** it comprises first actuating means (27) for moving separately and independently said second compressing flange (14) along said longitudinal direction (A) and **in that** said first compressing flange (12) is connected to the mandrel (2) so as to be moved together with the latter along said longitudinal direction (A) or is moved separately and independently along said longitudinal direction (A) by third actuating means.

2. Apparatus according to claim 1, wherein said first compressing flange (12) is coaxial to said mandrel (2) and slidable inside said moulding means (9) and is provided with a respective inner wall (12a) suitable to form said side wall (61) at said seat (62), in particular said inner wall (12a) being suitable to form, in cooperation with said moulding means (9) and said sectors (3), an inner portion (62c) of said seat (62) which is farther from said end front portion (63).

3. Apparatus according to claim 1 or 2, wherein said second compressing flange (14) is slidable and interposed between said first compressing flange (12) and said mandrel (2) and is provided with a shaped end (14a) suitable to form, in cooperation with said sectors (3) and said first compressing flange (12), said annular seat (62) and said end front portion (63), in particular said shaped end (14a) being suitable to form, in cooperation with an inner wall (12a) of said first compressing flange (12) and with said sectors (3), an outer portion (62b) of said seat (62) which is closer and adjacent to said end front portion (63).

4. Apparatus according to any preceding claim, wherein said moulding means (9) comprises a first forming cavity (31) suitable to form, with said mandrel (2), a conical portion (64) and a cylindrical portion (65) of said side wall (61) and a second forming cavity (32) suitable to receive said first compressing flange (12) and said second compressing flange (14), in particular said first forming cavity (31) including a respective first cylindrical wall (31a) to form said conical portion (64) and said cylindrical portion (65) of said side wall (61) and a second front annular wall (31b) to form an inner portion (62c) of said seat (62) in cooperation with said sectors (3) and said first compressing flange (12).

5. Apparatus according to any preceding claim, comprising second actuating means (28) for moving said mandrel (2) along said longitudinal direction (A), in particular said longitudinal direction (A) being parallel to a longitudinal axis (X) of said pipe (50).

6. Apparatus according to any preceding claim, comprising cooling means to cool said moulding means (9), in particular forming surfaces of said moulding means (9) which are arranged to abut against said side wall (61) of said bell joint (60).

7. Apparatus according to any preceding claim, comprising blowing means for introducing pressurized air into said pipe (50) and carrying out an airflow interposed between an inner surface of said pipe (50) and said mandrel (2) for facilitating the insertion of the latter into said pipe (50) along said longitudinal direction (A) and/or for obtaining forces suitable to push said side wall (61) of said bell joint (60) against forming surfaces of said moulding means (9) and said compressing flanges (12, 14).

8. Apparatus according to any preceding claim, wherein said mandrel (2) comprises a head portion (4) suitable to be inserted into said end (51) of said pipe (50) and a central portion (5) suitable to transversally widen said end (51) in order to form said bell joint (60), in particular said mandrel (2) comprising at said head portion (4) a plurality of openings (39) for pressurized air to flow outside.

9. Apparatus according to any preceding claim, comprising stopping means (10) fixed to said moulding means (9) and arranged to abut against and lock, at least along said longitudinal direction (A), said pipe (50) in a closed position of said moulding means (9).

10. Method for making a bell joint (60) on an end (51) of a plastic material pipe (50) by means of hot plastic deformation using a forming apparatus (1) according to any preceding claim, comprising in sequence the following steps:
- positioning an end (51) of said pipe (50) in moulding means (9) arranged in an open configuration (step 1);
- closing said moulding means (9) so as to enclose and lock said end (51) (step 2);
- moving a mandrel (2) and a first compressing flange (12) along a longitudinal direction (A) up to a first inner position (S1) so as to insert said mandrel (2) into said end (51) for enlarging the latter and partially form a side wall (61) of said bell joint (60) (step 3);
- expanding sectors (3) of said mandrel (2) transversally and externally towards said moulding means (9) in an extended position (E) in order to form on said side wall (61) an annular seat (62) for a sealing gasket (step 4);
- moving a second compressing flange (14) separately and independently along said longitudinal direction (A) till an end front portion (63) of said bell joint (60) is abutted (step 5);
- moving said mandrel (2) and said first compressing flange (12) along said longitudinal direction (A) up to a second inner position (S2) and at the same time moving said second compressing flange (14) along said longitudinal direction (A) so as to compress and upset the plastic material against said moulding means (9), said first compressing flange (12) and said sectors (3) in order to precisely form said annular seat (62) and said front portion (63) of said bell joint (60) (step 6);
- retracting said sectors (3) within said said mandrel (2) and moving along said longitudinal direction (A) said mandrel (2) and said compressing flanges (12, 14) away and in disengagement from said pipe (50) provided with said bell joint (60);
- opening said moulding means (9) for disengaging said pipe (50).

11. Method according to claim 10, comprising cooling said bell joint (60) before retracting said sectors (3) and moving said mandrel (2) and said compressing flanges (12, 14) away from said pipe (50).

12. Method according to claim 10 or 11, comprising during said moving of said mandrel (2) introducing pressurized air into said pipe (50) to produce an airflow interposed between an inner surface of said pipe (50) and said mandrel (2) and suitable to facilitate the insertion of the latter into said pipe (50).

13. Method according to any one of claims 10 to 12, comprising introducing pressurized air into said pipe (50) during at least said compressing and upsetting with said second compressing flange (14) in order to exert forces suitable to push said side wall (61) of said bell joint (60) against forming surfaces of said moulding means (9) and of said compressing flanges (12, 14).

14. Method according to any one of claims 10 to 13, wherein before said positioning there is provided to heat said end (51) of the pipe (50), in particular at a temperature close to the softening temperature of said plastic material.

## Patentansprüche

1. Formungsvorrichtung (1) zur Herstellung einer Glockenverbindung (60) an einem Ende (51) eines Kunststoffmaterialrohrs (50) mittels Kunststoffwarmverformung mit einer Formeinrichtung (9) zum externen Umschließen des Endes (51) und einem Dorn (2), der entlang einer Längsrichtung (A) beweglich ist und in das Ende (51) einsetzbar ist, um die Glockenverbindung (60) in Zusammenwirkung mit der Formeinrichtung (9) auszubilden, wobei der Dorn (2) mit einer Vielzahl von Sektoren (3) versehen ist, die in Richtung der Formeinrichtung (9) in eine ausgedehnte Position (E) transversal und nach außen ausgedehnt werden können, um an einer Seitenwand (61) der Glockenverbindung (60) einen ringförmigen Sitz (62) für eine Dichtungsmanschette auszubilden, wobei die Vorrichtung (1) umfasst:
- einen ersten Kompressionsflansch (12), der entlang der Längsrichtung (A) beweglich ist und mit der Formeinrichtung (9) zusammenwirkt, um am ringförmigen Sitz (62) anzuliegen und die Seitenwand (61) desselben auszubilden;
- einen zweiten Kompressionsflansch (14), der entlang der Längsrichtung (A) beweglich ist, zwischen den ersten Kompressionsflansch (12) und den Dorn (2) eingefügt ist und so angeordnet ist, dass er an einem vorderen Endabschnitt (63) der Glockenverbindung (60) anliegt und diesen komprimiert, um das Kunststoffmaterial gegen die Formeinrichtung (9), den ersten Kompressionsflansch (12) und die Sektoren (3), die in der ausgedehnten Position (E) angeordnet sind, zu stauchen, um den Sitz (62) und den vorderen Endabschnitt (63) der Glockenverbindung (60) präzise auszubilden;
wobei die Vorrichtung (1) **dadurch gekennzeichnet ist, dass** sie umfasst eine erste Betätigungseinrichtung (27) zum separaten und unabhängigen Bewegen des zweiten Kompressionsflansch (14) entlang der Längsrichtung (A), und dass der erste Kompressionsflansch (12) mit dem Dorn (2) verbunden ist, so dass er zusammen mit dem letzteren entlang der Längsrichtung (A) bewegt wird, oder separat und unabhängig entlang der Längsrichtung (A) durch eine dritte Betätigungseinrichtung bewegt wird.

2. Vorrichtung nach Anspruch 1, wobei der erste Kompressionsflansch (12) zum Dorn (2) koaxial ist und innerhalb der Formeinrichtung (9) verschiebbar ist und mit einer jeweiligen Innenwand (12a) versehen ist, die geeignet ist, um die Seitenwand (61) an dem Sitz (62) auszubilden, wobei die Innenwand (12a) insbesondere geeignet ist, um in Zusammenwirkung mit der Formeinrichtung (9) und den Sektoren (3) einen inneren Abschnitt (62c) des Sitzes (62) auszubilden, der vom vorderen Endabschnitt (63) weiter entfernt liegt.

3. Vorrichtung nach Anspruch 1 oder 2, wobei der zweite Kompressionsflansch (14) verschiebbar ist und zwischen den ersten Kompressionsflansch (12) und den Dorn (2) eingefügt ist und mit einem gestalteten Ende (14a) versehen ist, das dazu geeignet ist, in Zusammenwirkung mit den Sektoren (3) und dem ersten Kompressionsflansch (12) den ringförmigen Sitz (62) und den vorderen Endabschnitt (63) auszubilden, wobei insbesondere das gestaltete Ende (14a) dazu geeignet ist, in Zusammenwirkung mit einer Innenwand (12a) des ersten Kompressionsflanschs (12) und mit den Sektoren (3) einen äußeren Abschnitt (62b) des Sitzes (62) auszubilden, der näher am vorderen Endabschnitt (63) liegt und zu diesem benachbart ist.

4. Vorrichtung nach einem vorangehenden Anspruch, wobei die Formeinrichtung (9) einen ersten Formungshohlraum (31), der geeignet ist, um mit dem Dorn (2) einen konischen Abschnitt (64) und einen zylindrischen Abschnitt (65) der Seitenwand (61) auszubilden, und einen zweiten Formungshohlraum (32), der geeignet ist, um den ersten Kompressionsflansch (12) und den zweiten Kompressionsflansch (14) aufzunehmen, umfasst, wobei insbesondere der erste Formungshohlraum (31) eine jeweilige erste zylindrische Wand (31a), um den konischen Abschnitt (64) und den zylindrischen Abschnitt (65) der Seitenwand (61) auszubilden, und eine zweite vordere ringförmige Wand (31b), um einen inneren Abschnitt (62c) des Sitzes (62) in Zusammenwirkung mit den Sektoren (3) und dem ersten Kompressionsflansch (12) auszubilden, umfasst.

5. Vorrichtung nach einem vorangehenden Anspruch mit einer zweiten Betätigungseinrichtung (28) zum Bewegen des Dorns (2) entlang der Längsrichtung (A), wobei die Längsrichtung (A) insbesondere zu einer Längsachse (X) des Rohrs (50) parallel ist.

6. Vorrichtung nach einem vorangehenden Anspruch mit einer Kühleinrichtung, um die Formeinrichtung (9), insbesondere Formungsoberflächen der Formeinrichtung (9), die so angeordnet sind, dass sie an der Seitenwand (61) der Glockenverbindung (60) anliegen, zu kühlen.

7. Vorrichtung nach einem vorangehenden Anspruch mit einer Blaseinrichtung zum Einführen von Druckluft in das Rohr (50) und Ausführen einer Luftströmung, die zwischen eine innere Oberfläche des Rohrs (50) und den Dorn (2) eingefügt wird, zum Erleichtern des Einsetzens des letzteren in das Rohr (50) entlang der Längsrichtung (A) und/oder zum Erhalten von Kräften, die geeignet sind, um die Seitenwand (61) der Glockenverbindung (60) gegen Formungsoberflächen der Formeinrichtung (9) und der Kompressionsflansche (12, 14) zu schieben.

8. Vorrichtung nach einem vorangehenden Anspruch, wobei der Dorn (2) einen Kopfabschnitt (4), der geeignet ist, um in das Ende (51) des Rohrs (50) eingesetzt zu werden, und einen zentralen Abschnitt (5), der geeignet ist, um das Ende (51) transversal aufzuweiten, um die Glockenverbindung (60) auszubilden, umfasst, wobei insbesondere der Dorn (2) an dem Kopfabschnitt (4) eine Vielzahl von Öffnungen (39) umfasst, damit Druckluft nach außen strömt.

9. Vorrichtung nach einem vorangehenden Anspruch mit einer Stoppeinrichtung (10), die an der Formeinrichtung (9) befestigt ist und so angeordnet ist, dass sie zumindest entlang der Längsrichtung (A) am Rohr (50) in einer geschlossenen Position der Formeinrichtung (9) anliegt und dieses verriegelt.

10. Verfahren zur Herstellung einer Glockenverbindung (60) an einem Ende (51) eines Kunststoffmaterialrohrs (50) mittels Kunststoffwarmverformung unter Verwendung einer Formungsvorrichtung (1) nach einem vorangehenden Anspruch mit den folgenden Schritten in Reihe:
- Positionieren eines Endes (51) des Rohrs (50) in einer Formeinrichtung (9), die in einer offenen Konfiguration angeordnet ist (Schritt 1);
- Schließen der Formeinrichtung (9), um das Ende (51) zu umschließen und zu verriegeln (Schritt 2);
- Bewegen eines Dorns (2) und eines ersten Kompressionsflanschs (12) entlang einer Längsrichtung (A) bis zu einer ersten inneren Position (S1), um den Dorn (2) in das Ende (51) zum Vergrößern des letzteren einzusetzen und teilweise eine Seitenwand (61) der Glockenverbindung (60) auszubilden (Schritt 3);
- transversales Ausdehnen von Sektoren (3) des Dorns (2) nach außen in Richtung der Formeinrichtung (9) in eine ausgedehnte Position (E), um an der Seitenwand (61) einen ringförmigen Sitz (62) für eine Dichtungsmanschette auszubilden (Schritt 4);
- separates und unabhängiges Bewegen eines zweiten Kompressionsflanschs (14) entlang der Längsrichtung (A), bis ein vorderer Endabschnitt (63) der Glockenverbindung (60) zur Anlage gebracht ist (Schritt 5);
- Bewegen des Dorns (2) und des ersten Kompressionsflanschs (12) entlang der Längsrichtung (A) bis zu einer zweiten inneren Position (S2) und gleichzeitig Bewegen des zweiten Kompressionsflanschs (14) entlang der Längsrichtung (A), um das Kunststoffmaterial gegen die Formeinrichtung (9), den ersten Kompressionsflansch (12) und die Sektoren (3) zu komprimieren und zu stauchen, um den ringförmigen Sitz (62) und den vorderen Abschnitt (63) der Glockenverbindung (60) präzise auszubilden (Schritt 6);
- Zurückziehen der Sektoren (3) in den Dorn (2) und Bewegen des Dorns (2) und der Kompressionsflansche (12, 14) entlang der Längsrichtung (A) von dem Rohr (50) weg und außer Eingriff damit, das mit der Glockenverbindung (60) versehen ist;
- Öffnen der Formeinrichtung (9) zum Lösen des Rohrs (50).

11. Verfahren nach Anspruch 10, das das Kühlen der Glockenverbindung (60) vor dem Zurückziehen der Sektoren (3) und das Bewegen des Dorns (2) und der Kompressionsflansche (12, 14) von dem Rohr (50) weg umfasst.

12. Verfahren nach Anspruch 10 oder 11, das während der Bewegung des Dorns (2) das Einführen von Druckluft in das Rohr (50) umfasst, um eine Luftströmung zu erzeugen, die zwischen einer innere Oberfläche des Rohrs (50) und den Dorn (2) eingefügt wird und dazu geeignet ist, das Einsetzen des letzteren in das Rohr (50) zu erleichtern.

13. Verfahren nach einem der Ansprüche 10 bis 12, das das Einführen von Druckluft in das Rohr (50) während zumindest des Komprimierens und Stauchens mit dem zweiten Kompressionsflansch (14) umfasst, um Kräfte auszuüben, die geeignet sind, um die Seitenwand (61) der Glockenverbindung (60) gegen Formungsoberflächen der Formeinrichtung (9) und der Kompressionsflansche (12, 14) zu schieben.

14. Verfahren nach einem der Ansprüche 10 bis 13, wobei vor dem Positionieren vorgesehen ist, das Ende (51) des Rohrs (50) zu erhitzen, insbesondere auf eine Temperatur nahe der Erweichungstemperatur des Kunststoffmaterials.

## Revendications

1. Appareil de formation (1) pour la fabrication d'un raccord tulipe (60) à une extrémité (51) d'un tuyau en matière plastique (50) au moyen de la déformation plastique à chaud, comprenant un moyen de moulage (9) pour enserrer de façon externe ladite extrémité (51) et un mandrin (2) mobile le long d'une direction longitudinale (A) et insérable dans ladite extrémité (51) afin de former ledit raccord tulipe (60) en coopération avec ledit moyen de moulage (9), ledit mandrin (2) étant doté d'une pluralité de secteurs (3) qui peuvent être agrandis transversalement et de façon externe vers ledit moyen de moulage (9) dans une position étendue (E) pour former sur une paroi latérale (61) dudit raccord tulipe (60) un siège annulaire (62) pour un joint étanche, ledit appareil (1) comprenant:
- une première bride de compression (12) mobile le long de ladite direction longitudinale (A) et coopérant avec ledit moyen de moulage (9) pour buter contre et former ladite paroi latérale (61) sur ledit siège annulaire (62);
- une seconde bride de compression (14) mobile le long de ladite direction longitudinale (A), interposée entre ladite première bride de compression (12) et ledit mandrin (2) et agencée pour buter contre et compresser une portion avant d'extrémité (63) dudit raccord tulipe (60) de sorte à aplatir le matériau plastique contre ledit moyen de moulage (9), ladite bride de compression (12) et lesdits secteurs (3), agencés dans ladite position étendue (E) afin de former précisément ledit siège (62) et ladite portion avant d'extrémité (63) dudit raccord tulipe (60);
ledit appareil (1) étant **caractérisé en ce qu'**il comprend un premier moyen d'actionnement (27) pour déplacer séparément et indépendamment ladite seconde bride de compression (14) le long de ladite direction longitudinale (A) et **en ce que** ladite première bride de compression (12) est raccordée au mandrin (2) de sorte à être déplacée conjointement avec cette dernière le long de ladite direction longitudinale (A) ou est déplacée séparément et indépendamment le long de ladite direction longitudinale (A) par un troisième moyen d'actionnement.

2. Appareil selon la revendication 1, dans lequel ladite première bride de compression (12) est coaxiale audit mandrin (2) et coulissante dans ledit moyen de moulage (9) et est dotée d'une paroi intérieure respective (12a) adaptée pour former ladite paroi latérale (61) sur ledit siège (62), en particulier ladite paroi intérieure (12a) étant adaptée pour former, en coopération avec ledit moyen de moulage (9) et lesdits secteurs (3), une portion intérieure (62c) dudit siège (62) qui est plus loin de ladite portion avant d'extrémité (63).

3. Appareil selon la revendication 1 ou 2, dans lequel ladite seconde bride de compression (14) est coulissante et interposée entre ladite première bride de compression (12) et ledit mandrin (2) est doté d'une extrémité formée (14a) adaptée pour former, en coopération avec lesdits secteurs (3) et ladite première bride de compression (12), ledit siège annulaire (62) et ladite portion avant d'extrémité (63), en particulier ladite extrémité formée (14a) étant adaptée pour former, en coopération avec une paroi intérieure (12a) de ladite première bride de compression (12) et avec lesdits secteurs (3), une portion extérieure (62b) dudit siège (62) qui est plus près et adjacente à ladite portion avant d'extrémité (63).

4. Appareil selon une quelconque revendication précédente, dans lequel ledit moyen de moulage (9) comprend une première cavité de formation (31) adaptée pour former, avec ledit mandrin (2), une portion conique (64) et une portion cylindrique (65) de ladite paroi latérale (61) et une seconde cavité de formation (32) adaptée pour recevoir ladite première bride de compression (12) et ladite seconde bride de compression (14), en particulier ladite première cavité de formation (31) incluant une première paroi cylindrique (31a) respective pour former ladite portion conique (64) et ladite portion cylindrique (65) de ladite paroi latérale (61) et une seconde paroi annulaire avant (31b) pour former une portion intérieure (62c) dudit siège (62) en coopération avec lesdits secteurs (3) et ladite première bride de compression (12).

5. Appareil selon une quelconque revendication précédente, comprenant un second moyen d'actionnement (28) pour le déplacement dudit mandrin (2) le long de ladite direction longitudinale (A), en particulier ladite direction longitudinale (A) étant parallèle à un axe longitudinal (X) dudit tuyau (50).

6. Appareil selon une quelconque revendication précédente, comprenant un moyen de refroidissement pour refroidir ledit moyen de moulage (9), en particulier des surfaces de formation dudit moyen de moulage (9) qui sont agencées pour buter contre ladite paroi latérale (61) dudit raccord tulipe (60).

7. Appareil selon une quelconque revendication précédente, comprenant un moyen de soufflage pour l'introduction de l'air pressurisé dans ledit tuyau (50) et la réalisation d'un flux d'air interposé entre une surface intérieure dudit tuyau (50) et dudit mandrin (2) pour faciliter l'insertion de ce dernier dans ledit tuyau (50) le long de ladite direction longitudinale (A) et/ou pour obtenir des forces adaptées pour pousser ladite paroi latérale (61) dudit raccord tulipe (60) contre des surfaces de formation dudit moyen de moulage (9) et lesdites brides de compression (12, 14).

8. Appareil selon une quelconque revendication précédente, dans lequel ledit mandrin (2) comprend une portion de tête (4) adaptée pour être insérée dans ladite extrémité (51) dudit tuyau (50) et une portion centrale (5) adaptée pour élargir transversalement ladite extrémité (51) afin de former ledit raccord tulipe (60), en particulier ledit mandrin (2) comprenant sur ladite portion de tête (4) une pluralité d'ouvertures (39) pour que l'air pressurisé circule dehors.

9. Appareil selon une quelconque revendication précédente, comprenant un moyen d'arrêt (10) fixé sur ledit moyen de moulage (9) et agencé pour buter contre et verrouiller, au moins le long de ladite direction longitudinale (A), ledit tuyau (50) dans une position fermée dudit moyen de moulage (9).

10. Procédé de fabrication d'un raccord tulipe (60) sur une extrémité (51) d'un tuyau en matière plastique (50) au moyen de la déformation plastique à chaud en utilisant un appareil de formation (1) selon une quelconque revendication précédente, comprenant en séquence les étapes suivantes:
- le positionnement d'une extrémité (51) dudit tuyau (50) dans le moyen de moulage (9) agencé dans une configuration ouverte (étape 1);
- la fermeture dudit moyen de moulage (9) de sorte à enserrer et verrouiller ladite extrémité (51) (étape 2);
- le déplacement d'un mandrin (2) et d'une première bride de compression (12) le long d'une direction longitudinale (A) jusqu'à une première position intérieure (S1) de sorte à insérer ledit mandrin (2) dans ladite extrémité (51) pour agrandir cette dernière et partiellement former une paroi latérale (61) dudit raccord tulipe (60) (étape 3);
- l'agrandissement de secteurs (3) dudit mandrin (2) transversalement et de façon externe vers ledit moyen de moulage (9) dans une position étendue (E) afin de former sur ladite paroi latérale (61) un siège annulaire (62) pour un joint étanche (étape 4);
- le déplacement d'une seconde bride de compression (14) séparément et indépendamment le long de ladite direction longitudinale (A) jusqu'à ce qu'une portion avant d'extrémité (63) dudit raccord tulipe (60) soit en butée (étape 5);
- le déplacement dudit mandrin (2) et de ladite bride de compression (12) le long de ladite direction longitudinale (A) jusqu'à une seconde position intérieure (S2) et en même temps le déplacement de ladite seconde bride de compression (14) le long de ladite direction longitudinale (A) de sorte à compresser et aplatir le matériau plastique contre ledit moyen de moulage (9), ladite première bride de compression (12) et lesdits secteurs (3) afin de former précisément ledit siège annulaire (62) et ladite portion avant (63) dudit raccord tulipe (60) (étape 6);
- la rétraction desdits secteurs (3) dans ledit mandrin (2) et l'éloignement le long de ladite direction longitudinale (A) dudit mandrin (2) et desdites brides de compression (12, 14) et la mise en hors prise dudit tuyau (50) doté dudit raccord tulipe (60);
- l'ouverture dudit moyen de moulage (9) pour mettre hors prise ledit tuyau (50).

11. Procédé selon la revendication 10, comprenant le refroidissement dudit raccord tulipe (60) avant la rétraction desdits secteurs (3) et le déplacement dudit mandrin (2) et desdites brides de compression (12, 14) loin dudit tuyau (50).

12. Procédé selon la revendication 10 ou 11, comprenant durant ledit déplacement dudit mandrin (2) l'introduction d'air pressurisé dans ledit tuyau (50) pour produire un flux d'air interposé entre une surface intérieure dudit tuyau (50) et ledit mandrin (2) et adapté pour faciliter l'insertion de ce dernier dans ledit tuyau (50).

13. Procédé selon l'une quelconque des revendications 10 à 12, comprenant l'introduction d'air pressurisé dans ledit tuyau (50) pendant au moins ladite compression et ledit aplatissement avec ladite seconde bride de compression (14) afin d'exercer des forces adaptées pour pousser ladite paroi latérale (61) dudit raccord tulipe (60) contre des surfaces de formation dudit moyen de moulage (9) et desdites brides de compression (12, 14).

14. Procédé selon l'une quelconque des revendications 10 à 13, dans lequel avant ledit positionnement il est prévu de chauffer ladite extrémité (51) du tuyau (50), en particulier à une température proche de la température de ramollissement dudit matériau plastique.
